# DEMANDE DE BREVET EUROPEEN

(11) **EP 1 369 620 A2**
(43) Date de publication de la demande: **10.12.2003**
(21) Numéro de dépôt: 03291349.3
(22) Date de dépôt: 05.06.2003
(51) Int. Cl.: F16H 1/24

(54) **Agencement d'une masse d'inertie sur un axe de rotation et boite de vitesses comportant un tel agencement**

(30) Priorité: 05.06.2002 FR 0206907
(71) Demandeur: Peugeot Citroen Automobiles, 78140 Velizy-Villacoublay (FR)
(72) Inventeur: Davi, Claude, 68210 Hecken (FR)
(74) Mandataire: De Cuenca, Emmanuel Jaime

(57) **Abrégé**

L'invention concerne un agencement d'une masse d'inertie (1) sur un axe (16) de rotation, notamment pour dispositif de commande de boîte de vitesses, la masse d'inertie (1) comportant une masselotte (11) reliée à une base (13) par l'intermédiaire d'un bras (12), un palier (18) relié au bras (12), une articulation (14) disposée sur le palier (18) et destinée à coopérer avec une biellette, l'axe (16) de rotation coopérant avec un alésage de la base (13), un coussinet (15) emmanché dans l'alésage formé dans la base (13) et disposé entre l'axe (16) de rotation et la masse d'inertie (1).

Selon l'invention, l'agencement comporte une couche (17) de matériau à faible coefficient de frottement disposée sur la surface extérieure de l'axe (16) de rotation et/ou sur la surface intérieure du coussinet (15).

## Description

L'invention se rapporte à un agencement d'une masse d'inertie sur un axe de rotation et à une boîte de vitesses comportant un tel agencement.

Il est connu dans l'art antérieur des dispositifs de commande manuelle du changement de rapport de boîte de vitesses pour véhicule automobile.

Ces dispositifs comprennent traditionnellement un sélecteur de vitesses disposé dans l'habitacle du véhicule. Ce sélecteur est généralement lié aux arbres de passage et de sélection de la boîte de vitesses par le biais de câbles de commande.

Ainsi, la position du sélecteur de vitesses détermine l'enclenchement d'un rapport de boîte de vitesses. Les opérations précédant cet enclenchement sont la sélection puis le passage d'un des trains d'engrenages. Plusieurs trains d'engrenages constituent le dispositif interne de la boîte de vitesses.

L'enclenchement d'un train d'engrenages, donc d'un rapport de boîte, est ainsi obtenu par le déplacement de fourchettes disposées sur les arbres de passage et de sélection. Ces arbres sont solidarisés à des leviers. On trouve ainsi un levier de sélection et un levier de passage coopérant respectivement avec l'arbre de sélection et l'arbre de passage.

Ces leviers sont pourvus généralement d'une ou plusieurs articulations, assurant notamment leur liaison aux câbles précédemment cités, donc leur liaison au sélecteur de vitesses.

Afin de faciliter l'enclenchement d'un rapport de boîte et notamment dans un soucis d'amélioration du confort du conducteur lors d'un changement de rapport, il est connu l'utiliser une masse d'inertie. En effet, l'une des particularités d'une masse d'inertie est de favoriser le déplacement en rotation de l'axe de sélection, donc l'enclenchement d'un rapport. L'inertie générée par la masse d'inertie permet notamment d'entraîner l'arbre de sélection en rotation à partir d'un couple faible exercé au niveau du sélecteur de vitesses. La liaison entre l'arbre de sélection et la masse d'inertie est obtenue par le biais d'une biellette.

L'état de la technique; montre que généralement une masse d'inertie est constituée d'une masselotte reliée à une base par l'intermédiaire d'un bras.

La masselotte a une forme connue en « I » permettant d'obtenir un certain mode vibratoire garant d'une réduction notable des vibrations au niveau du sélecteur.

La base de la masse d'inertie a en général la forme d'un cylindre creux qui est monté sur un axe de rotation. L'axe de rotation est en général une vis de serrage assurant la fonction de fixation de la masse d'inertie sur le carter de boîte de vitesses.

Afin de permettre la rotation de la masse autour de cette vis de serrage, il est connu d'intégrer une entretoise entre la vis et la base de la masse.

La masse d'inertie comporte aussi un palier relié au bras. Ce palier comporte une articulation afin de fixer la biellette précédemment nommée.

Les différents éléments constitutifs de la masse d'inertie sont réalisés généralement en un seul tenant par un procédé de moulage.

Dans les dispositifs connus, il a été constaté par la demanderesse des ruptures de la vis de serrage provenant d'une usure par fatigue.

Un autre inconvénient constaté dans les systèmes connus est que la vis de la masse d'inertie à tendance à se dessérer sous l'effet des vibrations occasionnées par le fonctionnement du moteur du véhicule. Généralement, ce problème de fixation de la masse d'inertie génère également des bruits de fonctionnement gênants pour l'utilisateur du véhicule.

Un but de la présente invention est de proposer un agencement d'une masse d'inertie sur un axe de rotation, notamment pour dispositif de commande de boîte de vitesses, la masse d'inertie comportant une masselotte reliée à une base par l'intermédiaire d'un bras, un palier relié au bras, une articulation disposée sur le palier et destinée à coopérer avec une biellette, l'axe de rotation coopérant avec un alésage formé dans la base, un coussinet emmanché dans l'alésage de la base et disposé entre l'axe de rotation et la masse d'inertie palliant tout ou partie des inconvénients de l'art antérieur relevés ci-dessus.

A cette fin, l'agencement d'une masse d'inertie selon l'invention, par ailleurs conforme à la définition générique qu'en donne le préambule ci-dessus, est essentiellement caractérisé en ce qu'il comporte une couche de matériau à faible coefficient de frottement disposée sur la surface extérieure de l'axe de rotation et/ou sur la surface intérieure du coussinet.

Par ailleurs, l'invention peut comporter l'une ou plusieurs des caractéristiques suivantes :
- l'axe de rotation est pourvu d'un alésage axial dans lequel est disposé une vis de fixation de la masse d'inertie sur l'axe de rotation.
- l'agencement comporte deux butées axiales, situées respectivement aux deux extrémités de l'axe de rotation, conformées pour empêcher le déplacement de la masse d'inertie selon une direction parallèle à l'axe de rotation,
- une première extrémité de l'axe comporte un épaulement radial, formant une première butée axiale,
- une seconde butée axiale est constituée d'une rondelle disposée entre une seconde extrémité de l'axe et la tête de la vis de fixation.
- l'axe de rotation est constitué d'un matériau métallique et réalisé par la technologie de la métallurgie des poudres.
- la couche de matériau est constitué d'un matériau du type polytétrafluoroétylène et a une épaisseur comprise entre 30 µm et 70 µm.
- le coussinet est constitué d'un matériau, tel que du plastique, pourvu de propiétés d'amortissement des vibrations.

L'invention concerne également une boîte de vitesses, notamment pour véhicule automobile comprenant un arbre de sélection destiné à être relié à un levier de changement de vitesses et une masse d'inertie agencée sur l'arbre de sélection, caractérisé en ce que l'agencement de la masse d'inertie sur l'arbre de sélection est conforme à l'une quelconque des caractéristiques précédentes.

D'autres particularités et avantages apparaîtront à la lecture de la description ci-après, faite en référence aux figures dans lesquelles :
- la figure 1 est une vue en perspective et partielle d'un dispositif de commande de boîte de vitesses comportant une masse d'inertie conforme à l'invention,
- la figure 2 représente une vue en perspective d'un détail de la masse d'inertie de la figure 1, illustrant l'agencement de la masse d'inertie sur son axe de rotation,
- la figure 3 représente une vue partiellement en coupe de la masse d'inertie de la figure 2.

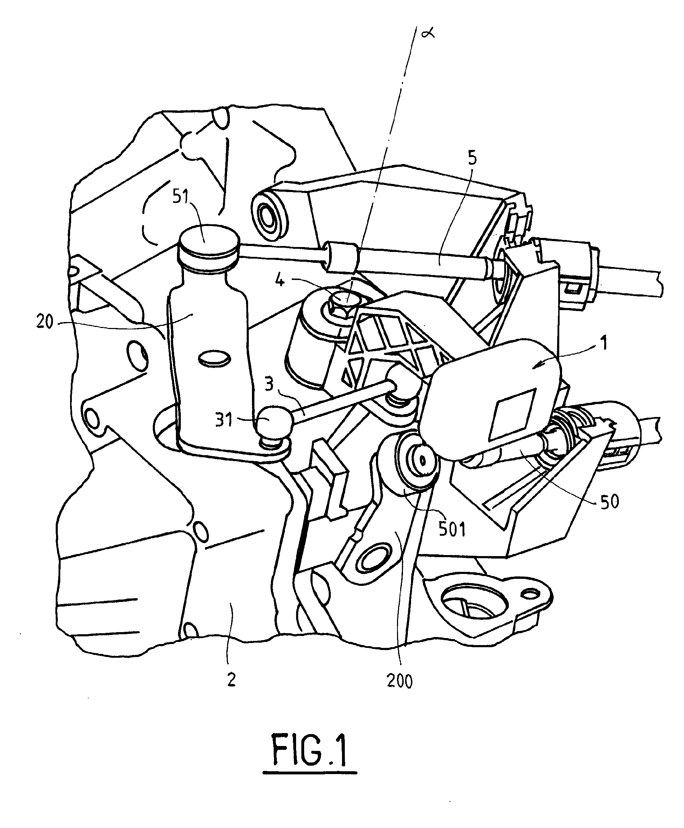

La figure 1 représente un dispositif de commande d'une boîte de vitesses 2 comprenant des câbles de commandes 5 et 50 reliés respectivement à un levier de sélection 20 et de passage 200. Ces leviers 20, 200 sont solidarisés aux arbres de sélection et de passage (non représentés). Ils font ainsi partie des moyens d'enclenchement d'un rapport de boîte de vitesses.

Les câbles 5, 50 de commande sont liés d'un côté au sélecteur de vitesses (non représenté) présent dans l'habitacle du véhicule. De l'autre côté, les extrémités de ces câbles 5, 50 de commande sont liés respectivement au levier de sélection 20 par une articulation 51 et au levier de passage 200 par une articulation 501.

Une masse d'inertie 1 est montée sur le carter de la boîte de vitessess 2 par des moyens décrits plus en détail ci-après.

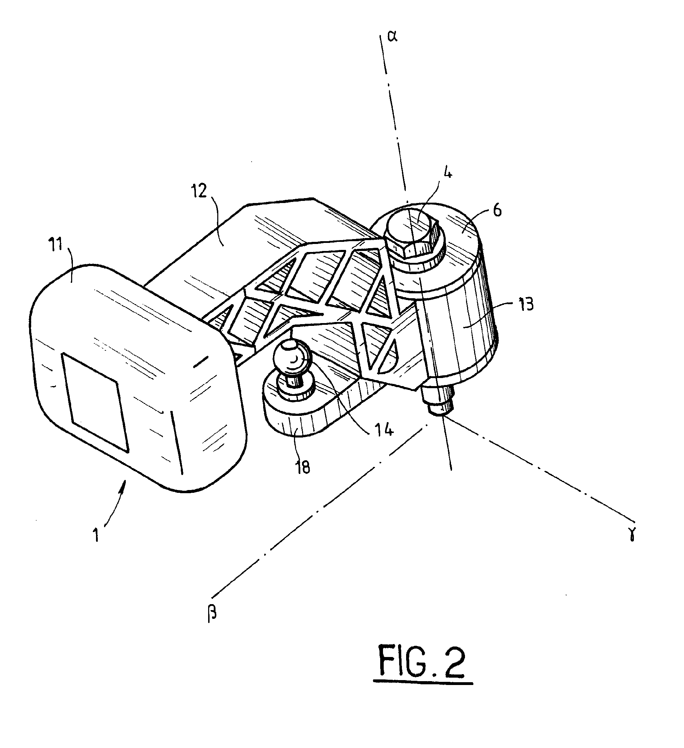

La masse d'inertie 1 est reliée au levier de sélection 20 par l'intermédiaire d'une biellette 3 dont les extrémités comportent des rotules coopérant avec des articulations. Une première articulation 31 est située sur le levier de sélection 20. La seconde articulation 14 est disposée sur un palier 18 de la masse d'inertie, représenté en figure 2. La masse d'inertie 1 est fixée sur le carter de la boîte de vitesses 2 au moyen d'une vis de serrage 4, suivant un axe α.

La masse d'inertie 1 (figure 2) comprend une masselotte 11 réalisée de préférence d'après la technologie de la métallurgie des poudres. Néanmoins, elle peut être réalisée d'après les procédés de forgeage d'un acier ou de moulage, connus dans l'art antérieur.

La masselotte 11 est liée à une base 13 par l'intermédiaire d'un bras 12. Un palier 18 en forme de saillie rattachée au bras 12 supporte une articulation 14 prévue pour coopérer avec une rotule de la biellette 3 précédemment décrite.

Le bras 12, le palier 18 et la base 13 sont réalisés de préférence en matière plastique par moulage et d'un seul tenant. Le bras 12 a de préférence une structure en nid d'abeille. Ce procédé de fabrication permet d'obtenir une pièce légère et fortement résistante aux effets des vibrations subies par la masse d'inertie.

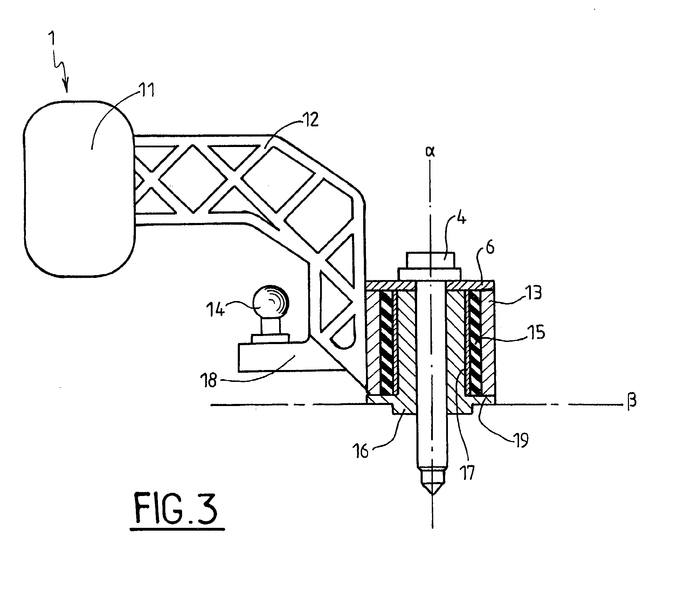

Les différentes pièces permettant la rotation de la masse d'inertie 1 autour de l'axe a et son maintien sur un axe de rotation 16 et sur le carter de boîte de vitesses 2 sont représentées sur la figure 3.

En effet, cette vue partiellement en coupe suivant le plan (α, β) (référentiel α, β, γ de la figure 2) de la masse d'inertie 1 illustre l'agencement de la masse d'inertie et notamment de la base 13 sur l'axe de rotation 16.

La base 13 cylindrique de la masse d'inertie 1 comprend un alésage en son centre suivant l'axe α. Cet alésage est prévu pour accueillir un coussinet 15.

Le coussinet 15 est de forme tubulaire de façon à permettre son montage sur l'axe de rotation 16.

L'axe de rotation 16 est fixé sur le carter de boîte de vitesses par le biais de la vis de serrage 4. A cet effet, l'axe de rotation 16 comprend en son centre un alésage permettant le passage du corps de la vis de serrage 4.

La surface extérieure de l'axe de rotation 16 est revêtue d'une couche 17 à base de téflon. Ainsi la couche 17 est disposée entre l'axe de rotation 16 et le coussinet 15. La couche 17 permet de combler avantageusement une partie du jeu utile au mouvement de rotation de la masse et améliore par la même sa rotation par glissement autour de l'axe 16.

De préférence, le coussinet 15 est emmanché en force dans la base 13 de la masse d'inertie 1. Le diamètre intérieur du coussinet 15 est quant à lui légèrement supérieur au diamètre extérieur de l'axe de rotation 16. En effet, cet écart de dimension est utile à la rotation du coussinet 15 autour de l'axe de rotation 16 sur lequel est déposée la couche 17 à base de polytétrafluoroéthylène (PTFE). De préférence, la couche de PTFE a une épaisseur comprise entre 30 et 70 µm.

L'axe de rotation 16 est de forme cylindrique afin de coopérer avec la surface intérieure du coussinet 15. Cet axe est réalisé de préférence en matériau métallique et par la technologie de la métallurgie des poudres.

L'extrémité inférieure de l'axe de rotation 16 comprend un épaulement 19 dont la surface inférieure est en appui contre le carter (non représenté à la figure 3) de la boîte de vitesses 2.

L'extrémité supérieure de l'axe de rotation 16 coopère quant à elle avec une surface inférieure d'une rondelle 6 interposé entre l'axe 16 et la tête de la vis 4. Ainsi, la surface supérieure de la rondelle 6 est en contact avec la tête de la vis de serrage 4.

Le joint torique 6 et l'épaulement 19 assurent la fonction de butées, limitant le déplacement axial de la base 13. La rondelle 6 est de préférence recouverte de polytétrafluoroéthylène.

La base 13 de la masse d'inertie 1 est en contact, dans sa partie supérieure, avec la rondelle 6, et dans sa partie inférieure, avec l'épaulement 19. Du fait de la couche 17 de PTFE sur l'axe 16, sur l'épaulement 19 de l'axe 16, et sur la rondelle 6, les frottements de la base 13 en parties supérieure et inférieure sont quasi inexistants, favorisant ainsi la rotation de la masse d'inertie 1 autour de l'axe de rotation 16.

Le coussinet 15 est réalisé de préférence en matière plastique conférant à cette pièce des propriétés mécaniques propres à l'absorption des vibrations. En effet, on constate que l'utilisation du plastique permet de modifier les fréquences de vibrations et d'atténuer l'amplitude des sollicitations mécaniques transmises à la vis de serrage 4.

Ainsi l'invention permet de s'affranchir des problèmes de rupture et de desserrage de la vis de serrage 4 rencontré dans l'art antérieur.

En particulier la couche 17 à faible coefficient de frottement permet de diminuer les vibrations transmises à la masse d'inertie 1.

Enfin, bien que l'invention ait été décrite en liaison avec des modes de réalisation particuliers, elle comprend tous les équivalents techniques des moyens décrits.

Ainsi, l'ensemble des éléments constituant la masse d'inertie peuvent également être réalisée d'après la technologie de la métallurgie des poudres.

De même, le bras liant la masselotte à la base peut avoir une structure pleine à la place de la structure en nid d'abeille.

La couche 17 assurant le glissement du coussinet autour de l'axe de rotation peut comprendre un liquide pourvu de propriétés de glissement garantissant un coefficient de frottement faible. En outre, la couche peut être disposée à l'intérieur du coussinet et/ou sur la surface extérieure de l'arbre de rotation.

## Revendications

**1.** Agencement d'une masse d'inertie sur un axe (16) de rotation, notamment pour dispositif de commande de boîte de vitesses, la masse d'inertie (1) comportant une masselotte (11) reliée à une base (13) par l'intermédiaire d'un bras (12), un palier (18) relié au bras (12), une articulation (14) disposée sur le palier (18) et destinée à coopérer avec une biellette, l'axe (16) de rotation coopérant avec un alésage formé dans la base (13), un coussinet (15) emmanché dans l'alésage de la base (13) et disposé entre l'axe (16) de rotation et la masse d'inertie (1), **caractérisé en ce qu'**il comporte une couche (17) de matériau à faible coefficient de frottement disposée sur la surface extérieure de l'axe (16) de rotation et/ou sur la surface intérieure du coussinet (15).

**2.** Agencement selon la revendication 1, **caractérisé en ce que** l'axe (16) de rotation est pourvu d'un alésage axial dans lequel est disposé une vis (4) de fixation de la masse d'inertie (1) sur l'axe (16) de rotation.

**3.** Agencement selon la revendication 2, **caractérisé en ce qu'**il comporte deux butées (6, 19) axiales, situées respectivement aux deux extrémités de l'axe (16) de rotation, conformées pour empêcher le déplacement de la masse d'inertie (1) selon une direction parallèle à l'axe de rotation (16).

**4.** Agencement selon la revendication 3, **caractérisé en ce qu'**une première extrémité de l'axe (16) comporte un épaulement (19) radial, formant une première butée axiale.

**5.** Agencement selon la revendication 4, **caractérisé en ce qu'**une seconde butée axiale est constituée d'une rondelle (6) disposée entre une seconde extrémité de l'axe (16) et la tête de la vis (4) de fixation.
5, **caractérisé en ce que** l'axe (16) de rotation est constitué d'un matériau métallique et réalisé par la technologie de la métallurgie des poudres.

**7.** Agencement selon l'une quelconque des revendications 1 à 6, **caractérisé en ce que** la couche (17) de matériau est constitué d'un matériau du type polytétrafluoroéthylène.

**8.** Agencement selon l'une quelconque des revendications 1 à 7, **caractérisé en ce que** la couche (17) a une épaisseur comprise entre 30 µm et 70 µm.

**9.** Agencement selon la revendication 1, **caractérisé en ce que** le coussinet (15) est constitué d'un matériau, tel que du plastique, pourvu de propiétés d'amortissement des vibrations.

**10.** Boîte de vitesses, notamment pour véhicule automobile comprenant un arbre de sélection destiné à être relié à un sélecteur de changement de vitesses et à une masse d'inertie (1) agencée sur l'axe de rotation (16), **caractérisé en ce que** l'agencement de la masse d'inertie (1 ) sur l'axe de rotation (16) est conforme à l'une quelconque des revendications précédentes.
